# EUROPEAN PATENT SPECIFICATION

(11) **EP 1 027 461 B1**
(45) Date of publication and mention of the grant of the patent: **08.05.2002**
(21) Application number: 98950343.8
(22) Date of filing: 21.10.1998
(51) Int. Cl.: C21B 13/10

(54) **METHOD AND APPARATUS FOR MAKING METALLIC IRON**
VERFAHREN UND VORRICHTUNG ZUR HERSTELLUNG VON METALLISCHEM EISEN
PROCEDE ET APPAREIL DE FABRICATION D'UN FER METALLIQUE

(30) Priority: 23.10.1997 JP 29137897
(43) Date of publication of application: 16.08.2000
(73) Proprietor: KABUSHIKI KAISHA KOBE SEIKO SHO, Kobe-Shi, Hyogo-ken 651-0072 (JP)
(72) Inventor: KIKUCHI, Shoichi, Osaka Branch in Kobe Steel, Ltd., Osaka-shi, Osaka-fu 541-0051 (JP); URAGAMI, Akira, Osaka Branch in Kobe Steel, Ltd., Osaka-shi, Osaka-fu 541-0051 (JP); KOBAYASHI, Isao, Osaka Branch in Kobe Steel, Ltd., Osaka-shi, Osaka-fu 541-0051 (JP); TANIGAKI, Yasuhiro, Osaka Branch in Kobe Steel, Osaka-shi, Osaka-fu 541-0051 (JP); ITO, Eiichi, Osaka Branch in Kobe Steel, Ltd., Osaka-shi, Osaka-fu 541-0051 (JP); TOKUDA, Koji, Osaka Branch in Kobe Steel, Ltd., Osaka-shi, Osaka-fu 541-0051 (JP); TSUCHIYA, Osamu, Kobe-shi, Hyogo-ken 658-0084 (JP); ITO, Shuzo, Osaka Branch in Kobe Steel, Ltd., Osaka-shi, Osaka-fu 541-0051 (JP)
(74) Representative: Müller-Boré & Partner Patentanwälte
(86) International application number: PCT/JP98/04785
(87) International publication number: WO 99/20801

(56) References cited:
- US-A- 3 947 621
- PATENT ABSTRACTS OF JAPAN vol. 018, no. 668 (C-1289), 16 December 1994 & JP 06 264155 A (KANKYO SOKEN CONSULTANT:KK), 20 September 1994

## Description

### FIELD OF THE INVENTION

The present invention concerns an improvement in the technique for obtaining metallic iron by heat reduction of iron oxides such as iron ores together with a carbonaceous reducing agent such as carbon material and it relates to a method and an apparatus for making metallic iron of separating slag ingredients intruded as gangue ingredients in iron oxide sources and capable of efficiently making metallic iron at high purity.

### BACKGROUND ART

As a direct iron making method of directly reducing iron oxides such as iron ores or iron oxide pellets with a carbon material or a reducing gas, a shaft furnace method typically represented by the Midrex method has been known so far. The direct iron making method of this type comprises blowing a reducing gas produced from a natural gas or the like from a tuyere at a lower portion of a shaft furnace and reducing iron oxides utilizing the reducing effect of the gas to obtain metallic iron. Further, a reduced iron making process of using carbon material such as coal as a reducing agent instead of the natural gas has been noted in recent years and, concretely, a so-called SL/RN method has already been put to practical use.

Further, as another method of making reduced iron, U. S. Patent No. 3,443,931 discloses a process of making reduced iron by mixing a carbon material and a powdery iron oxide and forming them into lumps or pellets and heat reducing them on a rotary hearth to make reduce iron.

Reduced iron made by the methods described above is charged as it is or after formed into briquette or like other shape to an electric furnace and used as an iron source. As recycling of iron scraps has become vigorous in recent years, the reduced iron obtained by the methods described above has been noted as a diluent for impurity elements intruding into the scraps.

However, since a great amount of slag ingredients such as SiO₂, Al₂O₃ and CaO contained in the iron oxides used as the starting material (gangues in the iron ores) or carbon material (ashes in the coal) are intruded in the reduced iron obtained by the existent reduced iron making method, the iron quality of the product (purity as the metallic iron) is lowered.

In practical use, such slag ingredients are separated and removed in the succeeding refining step but increase in the amount of the slag not only lowers the yield of refined molten metal but also gives an undesired effect on the operation cost of the electric furnace, so that reduced iron of high iron quality and with less content of the slag ingredient has been demanded. However, for satisfying such a demand by the existent reduced iron making method described above, iron ores of high iron quality have to be used as the starting material for making the reduced iron, which greatly narrows the range for the selection of the starting material for iron making which can be put to practical use.

In addition, in the existent method described above, it is necessary to mix the iron oxide source and the carbon material and once mold preliminarily into lumps or pellets by means of a binder or sintering, so that a burden on the facility and operation for preliminary molding is increased inevitably.

Further, a method as described in Japanese Patent Laid-Open Hei 9-256017 filed by the present applicant comprises preliminarily molding a mixed powder of a carbonaceous reducing agent and iron oxide into a spherical or pellet shape, heat reducing the preliminary molding product thereby forming and growing an iron metal shell on the outer surface of the molding product and increasing the reduction potential in the metallic iron shell thereby capable of efficiently reducing the iron oxide at the inside and efficiently separating resultant metallic iron and formed slag. Accordingly, this method can be said to be extremely effective as a method capable of obtaining metallic iron at high metallization.

However, even this method still involves a problem that the starting mixture has to be preliminarily molded once into the spherical or pellet shape by means of a binder or sintering like that in the prior art described above, so that the burden on the facility and the operation for preliminary molding is increased.

Furthermore, Japanese Patent Laid-Open Hei 8-27507 discloses, as another direct reducing iron making method, a method of laying carbonaceous reducing powder containing a desulfurizer and powdery iron oxide each being stacked in a layered form on a movable hearth and heating them to obtain a sponge iron. It is empathized that since the iron oxide is reduced by the carbonaceous reducing agent and sulfur ingredients contained in the carbonaceous reducing agent such as coal are captured by the desulfurizer, sponge iron with less sulfur content can be obtained and subsequent desulfurizing load can be moderated according to this method.

However, while the method has a merit of not requiring preliminary molding of starting iron oxide material into a pellet or like other shape, the reducing efficiency is low to require a long time for heat reduction since the iron oxide source and the carbonaceous reducing agent are not in direct contact with each other, which is not suitable to practical use in the industrial scale in view of the productivity.

In addition, since the reduced iron is obtained as sponge iron in this method, a great amount of gangue ingredient is intruded into the sponge iron to lower the iron quality of the reduced iron. If the reduced iron of such low iron quality is supplied as an iron source to an electric furnace or the like, undesired effects are given on the operability of the electric furnace by the increase in the amount of the resultant slag, as well as results in other various problems such as lowering of the iron yield due to loss of iron caused by intrusion into the slag, increase of the energy consumption unit, lowering of the productivity and the like. In addition, since such problems become more conspicuous as the iron content in the iron oxide source is lowered, it is almost impossible to use the iron or iron oxide source at low quality for starting materials in the actual operation, so that only an iron oxide source at high quality can be used.

US-A-3,947,621 describes a furnace for producing molten metal from particulated metal oxides, comprising an annular hearth having a radially corrugated bottom forming radial valleys interspaced by radial ridges, a bed of particulated coke on said bottom and which is continuous in the bottom's annular direction, electric means for heating said bed to incandescence by an electric current passed through the bed in said direction, feeding means for feeding said oxides and additional particulated coke to said bed, said oxides being reduced by the incandescent bed to molten metal which flows into said valleys, and means for removing said molten metal from said valleys, so that said ridges prevent the molten metal from forming a melt that is continuous in said annular direction.

### DISCLOSURE OF THE INVENTION

The present invention has been accomplished in view of the foregoing problems in the prior art and an object thereof is to provide a method and an apparatus capable of making reduced iron with less intrusion of slag ingredients and at high Fe purity, without requiring preliminary molding to lumps or pellets and even from an iron oxide source of low quality as well as from an iron oxide source of high quality.

A manufacturing method according to the present invention capable of overcoming the foregoing problems comprises heating a mixed powder of an iron oxide containing powder and a carbonaceous reducing agent containing powder in a state being laid on a hearth, thereby conducting reduction and melting, wherein the mixed powder laid on the hearth is pressed and then heated, without previously molding the powder into a pellet or like other shape.

When the powder mixture laid on the hearth is heated after pressed into a compact state, the iron oxide surface and the carbonaceous reducing agent are brought into more intimate contact with each other to further increase the heat reducing efficiency preferably.

In another embodiment of this method, the layer of the mixed powder is formed with unevenness and then heated. When the mixed powder is heated after forming unevenness on the surface of the mixed powder layer thereby increasing the surface area, the heat reducing efficiency is further improved by the enlargement of the effective heating area.

In a further embodiment of this method, a product releasing promotion layer is previously formed on the hearth. In the present invention, the mixed powder laid on the hearth is heat reduced and melted as described above in which the molten reduced iron at high specific gravity may possibly be in direct contact with the hearth surface to thermally deteriorate refractories on the floor surface, or the reduced iron is deposited to the hearth surface upon discharging the products (reduced iron and formed slag) from the hearth surface after reduction and melting to possibly hinder the dischargeability. Provision of the product releasing promotion layer that also serves as heat protection can facilitate discharge of the product of the hearth and extend the working life of the hearth.

In a further preferred embodiment of this method, the mixed powder further contains a desulfurizer. The desulfurizer contained in the mixed powder captures the sulfur content formed in the heat reducing and melting step to reduce the sulfur content in the resultant reduced iron preferably.

An apparatus for making metallic iron according to the present invention used preferably for practicing the making method as described above comprises: a movable hearth, a supply mechanism for supplying a mixed powder of an iron oxide containing powder and a carbonaceous reducing agent containing powder on the hearth a compression mechanism for pressing the mixed powder laid on the hearth, a heating mechanism for heating the mixed powder on the hearth, a discharge mechanism for discharging a product reduced and melted by heating to the outside of the hearth and a separation mechanism for separating the product into reduced iron and slag.

A preferred embodiment of this apparatus comprises an unevenness forming mechanism for forming a unevenness to a layer of the mixed powder.

A preferred embodiment of this apparatus comprises a product releasing promotion layer forming mechanism for forming a product releasing promotion layer on the hearth.

In a preferred embodiments of this apparatus the hearth comprises a plurality of hearth units moving along a closed loop, comprises a plurality of reciprocating hearth units, or the hearth is of a rotational disk-shape.

In a preferred embodiment of this apparatus, the hearth comprises a plurality of hearth units rotating coaxially in the inside of a horizontally placed cylindrical refractory furnace.

In such embodiments, a series of steps of supplying the starting powder mixture through heat reduction and melting and discharging of the products can be made continuous and this is preferred for practicing the apparatus in an industrial scale.

As described above in the iron making method of the present invention, a mixed powder of an iron oxide containing powder and a carbonaceous reducing agent containing powder (hereinafter sometimes referred to as a carbon material) is reduced and melted by heating in a state being laid on a hearth thereby obtaining a metallic iron. Namely, since the iron oxide source and the carbon material are used in a powdery state and being mixed in this method, preliminary molding to lumps or pellets is no more required. Further, in this method, since the iron oxide source and the carbon material are put to heat reduction in a state mixed and adjacent with each other in the powdery state, heat reduction proceeds rapidly and reduction can be processed efficiently by heat treatment in a relatively short period of time. Further, in this method, since reduced iron formed by heat reduction is successively melted by heating and metallic iron is fused and agglomerated to each other while expelling slag ingredients, reduced iron with extremely less intrusion amount of the slag ingredients and high purity can be obtained even when an iron oxide source of low quality is used.

### BRIEF DESCRIPTION OF THE DRAWINGS

Fig. 1 is an explanatory plan view for a portion of an apparatus illustrating a preferred embodiment of the present invention;
Fig. 2 is transversal cross sectional view of an apparatus shown in Fig. 1;
Fig. 3 is a schematic explanatory plan view of an apparatus illustrating another embodiment of present invention,
Fig. 4 is a schematic vertical cross sectional view showing, in an enlarge scale, a heat reducing and melting section and a separating section of the apparatus shown in Fig. 3;
Fig. 5 is a schematic cross sectional view taken along line B-B in Fig. 3;
Fig. 6 is a schematic cross sectional view taken along line C-C in Fig. 3; and
Fig. 7, Fig. 8 and Fig. 10 are schematic vertical cross sectional views illustrating further embodiments of the present invention; and
Fig. 9 is a schematic transversal cross sectional view of Fig. 8.

### BEST MODE FOR CARRYING OUT THE INVENTION

The method of and the apparatus for making metallic iron according to the present invention will be explained more specifically with reference to the drawings illustrating preferred embodiments of apparatus for making metallic iron according to the present invention but the invention is not restricted to the illustrated embodiments but may be practiced by appropriate design change within a scope not departing the gist of the present invention as described above and to be described later which are also encompassed within a technical range of the present invention.

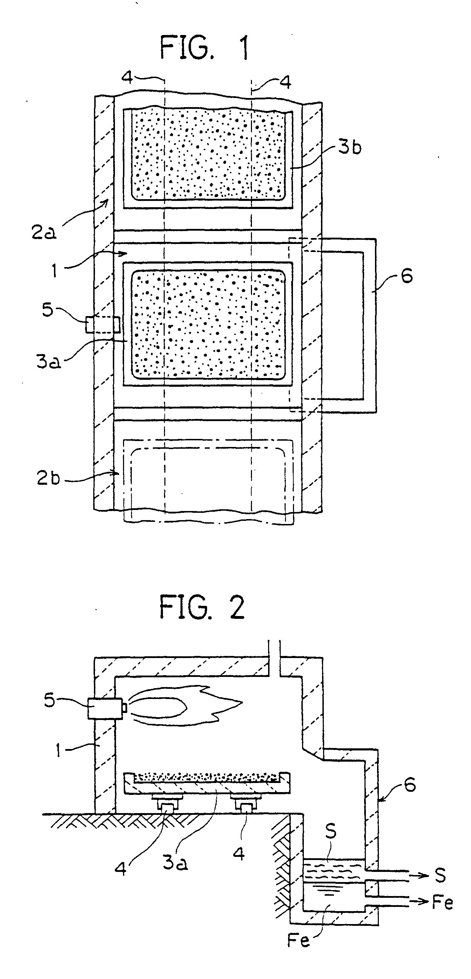

Fig. 1 and Fig. 2 illustrate an apparatus for making metallic iron according to the present invention, in which Fig. 1 is a schematic plan view with a ceiling portion being opened and Fig. 2 is a schematic transversal cross sectional view of Fig. 1. In the drawings, are shown, a heating furnace 1, starting material supply sections 2a, 2b, hearth units 3a, 3b, rails 4 for moving the hearth units, a burner 5 constituting a heating mechanism, and a melting separation furnace 6 constituting a separating section respectively.

In this embodiment, as shown in the drawings, pallet-like hearth units 3a, 3b are disposed such that they can reciprocate on the rails 4 in the heating furnace 1 being disposed to a central portion put between the starting material supply sections 2a, 2b. A mixed power of an iron oxide source and a carbon material is supplied at a starting material supply portion 2a (or 2b) in the hearth unit 3a (or 3b) to an appropriate thickness. The mixed powder layer is pressed into a compact state, or further formed with unevenness on the surface depending on the case, and then moved into the heating furnace 1 (Fig. 1 shows a state of supplying a starting material mixed powder into the hearth unit 3a at the starting material supply portion 2a in an upper portion of the drawing and then moving the unit 3a to the heating furnace 1), in which it is heated by the burner 5 to proceed reduction and melting.

The iron oxide source in the starting material mixed powder laid on the hearth unit 3a and sent into the heating furnace 1 receives heat from the burner 5, reduced by the carbon material in the mixed powder and carbon monoxide formed from the carbon material, and further heated and melted while being carburized by the carbon content from the adjacent carbon material. In this process, molten reduced iron is adhered and agglomerates to each other while expelling by-produced slag ingredients and gradually grown into large lumps of molten reduced iron. Accordingly, when they are heated for a predetermined period of time in the heating furnace 1, the molten reduced iron formed by reduction and adhered to each other into agglomerates in the hearth unit 3a forms larger lumps. In the molten lump of the reduced iron, molten reduced iron is adhered and agglomerated to each other while expelling the slag ingredients as described above in which only the slag ingredients are deposited on the surface but the slag ingredients do not substantially intrude to the inside.

After completing the reduction and melting, the hearth unit 3a is tilted by a not illustrated optional tilting device toward the melting and separation furnace 6. The product is discharged from the hearth unit 3a to the melting and separation furnace 6, further heated to increase the fluidity in the melting separation furnace 6 when the temperature of the product is lowered, and then the reduced iron Fe and slag S are separated due to the difference of the specific gravity, to draw the slag S from the surface portion and the metallic iron Fe from the bottom portion.

The hearth unit 3a after completion of the discharge of the product is moved to the starting material supply portion 2b shown in a lower portion of Fig. 1, the hearth unit 3b which has been already supplied with the starting material at the starting material supply portion 2a and caused to stand-by, is sent into the heating furnace 1, and the starting material mixed powder is heat reduced and melted in the same manner as described above. Meanwhile, the starting material is supplied (optionally with pressing or formation of surface unevenness) to other hearth unit in the starting material supply portion 2b shown in a lower portion of the drawing and is caused to stand-by for the next heat reduction and melting. Then, after discharging the reduced product from the hearth unit completed with heat reduction in the melting furnace 1, the hearth unit is moved to an upper portion of the drawing and delivered out of the heating furnace 1, while the hearth unit caused to stand-by in the starting material supply portion 2b is sent into the staving furnace 1. By repeating the operations, the starting material mixed powder can be intermittently heat reduced and melted continuously.

When the method is practiced, exhaust gases discharged from the heating furnace 1 contain considerable amount of heat and combustible gases (carbon monoxide and the like), if the exhaust gases are recycled as the fuel for the burner 5, they can contribute to the economization of the fuel cost, or they can be utilized effectively as a heat source or a fuel for facilities in neighborhood.

For preparing the starting material mixed powder upon practicing the method, a carbon material is blended in an amount more than the theoretical amount required for the reduction of iron oxides contain an iron oxide source and it is more preferred to control the blending amount of the carbon material so as to satisfy "required amount for the reduction of starting material iron oxide + required amount of the carburization of reduced iron + amount for oxidation loss". When the reduced iron formed in the heat reducing step is carburized in the heat reducing atmosphere, the melting point is lowered to further facilitate separation from the slag ingredients. Therefore, it is desirable to control the blending amount of the carbon material relative to the starting material iron oxide, while considering a theoretical amount required for the reduction and a carburization amount described above and, further, the amount for oxidation loss in the heating furnace.

The starting material mixed powder is laid on the hearth unit to an appropriate thickness. The thickness may be determined properly while considering the constitution, the scale and the heating efficiency of individual manufacturing apparatus, and a preferred thickness for rapidly heating the mixed powder layer as far as the inside and proceeding reduction and melting efficiently is from 10 to 300 mm and, generally, from 20 to 100 mm.

The starting material mixed powder may be laid at a substantially identical thickness over the entire surface on the hearth unit or is property pressed into a compact state by a pressing device into a compact state as described above, may be formed with unevenness on the surface to enlarge the effective heating area, or may be placed on the hearth unit each in an appropriate shape such as a trapezoidal shape at a plurality of positions with an appropriate spacing. The term "laid on the hearth" in the present invention also includes such arrangements for placing.

While the starting material mixed powder laid on the hearth unit may be merely made uniform in the thickness by an appropriate leveling mechanism. The powder is compressed into a compact state, for example, by a press roller such that iron oxide and carbon material are brought into more intimate contact, since the reducing efficiency can be increased more. Pressing into compact state means herein that the powder starting mixture is pressed and solidified while making the inter-granule distance of the starting material powder closer. This is essentially different, for example, from the prior art as described in Japanese Patent Laid-Open Hei 9-256017 in which the powder is preliminarily molded into lumps or pellets by using a binder or by means of sintering.

Upon applying the pressing treatment, if unevenness is formed on the surface of the pressed layer to enlarge the surface area, since heat from above can be efficiently transmitted to the inside of the mixed powder layer and release of CO₂ formed by the reducing reaction can also be accelerated, the reducing efficiency is further improved. There is no particular restriction on the shape of the unevenness but it may be in an optional shape such as linear, corrugating or lattice-like shape. If the unevenness is formed so as to partition the pressed layer to a lattice-like configuration of an appropriate size, metallic iron formed by heat reduction in each lattice is agglomerated into a molten lump and formed as a metallic iron lump of substantially uniform size, so that subsequent treatment (separation by sieving from the slag ingredient) is preferably standardized easily.

There is no particular restriction on the operation temperature upon heat reduction providing that the temperature is higher than the level capable of melting metallic iron or its carbonization product formed by reduction. In order to efficiently proceeded the heat reduction while minimizing the thermal degradation of the lined refractories of the heating furnace 1 or the hearth unit, it is within a range from 1350 to 1550°C, and more preferably, from 1400 to 1500°C.

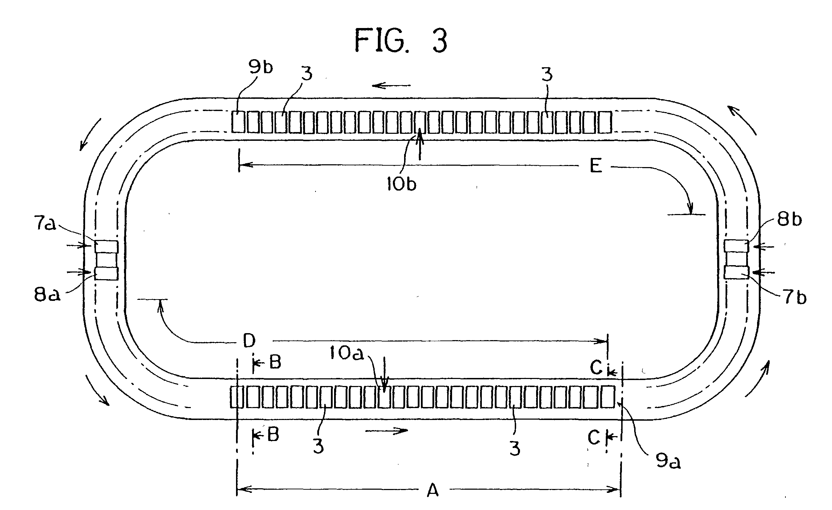

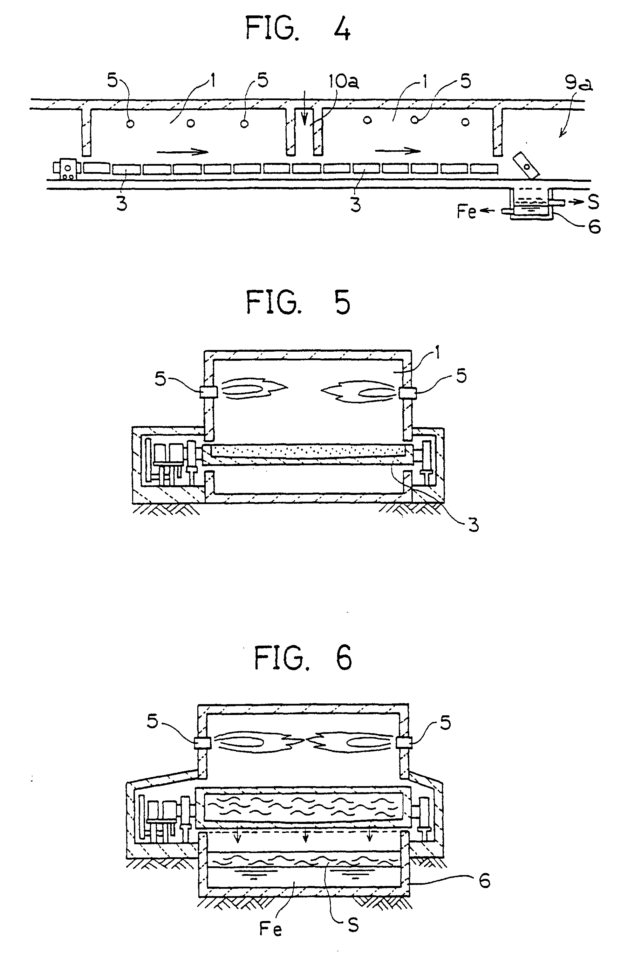

Fig. 3 to Fig. 6 show another embodiment of the present invention in which Fig. 3 is a schematic plan view, Fig. 4 is a schematic vertical cross sectional view of a region A in Fig. 3, Fig. 5 and Fig. 6 are, respectively, schematic cross sectional views taken along lines B-B and C-C in Fig. 3.

In the apparatus of this embodiment, a plurality of hearth units 3, 3, ... ... are arranged on a moving mechanism rotationally moving continuously along a track-like dosed loop in which each of the operations for the starting material mixed powder of: supplying → pressing to compact state (further, unevenness formation) → heat reducing and melting → discharging of products can be conducted continuously in the course of rotational movement along the track-shaped loop.

Specifically, in Fig. 3, are shown starting material supply sections 7a, 7b, pressing (or further unevenness formation) sections 8a, 8b, heat reduction zones D and E and product discharging sections 9a, 9b respectively in which the track-shaped loop is bisected such that two steps of heat reduction and melting can be conducted continuously in one loop.

Starting material powder supplied on the hearth unit 3 at the starting material supply portions 7a, 7b is pressed into a compact state in the pressing sections 8a, 8b, then sent to the heating zones D, E, and receives heat from a heating mechanism such as a burner 5 in the regions D, E to proceed heat reduction. Then, the hearth pallet 3 arriving at the discharged portions 9a, 9b after completing reduction and melting is tilted by an optional tilting device as shown in Fig. 4 and Fig. 6, by which the products at the inside (reducing and melting product) is discharged to a melting and separation furnace 6 and the reduced iron Fe and the formed slag S are successively separated due to the difference of the specific gravity.

Further, in this embodiment, as shown in Fig. 3 and Fig. 4, secondary starting material supply portions 10a, 10b are disposed each about at an intermediate position of the heating zones D, E, so that the starting material mixed powder can be secondarily supplied at the portion. That is, even if the starting material supplied as the powdery mixture is previously applied with pressing, the volume thereof is decreased to about 1/2 - 1/3 by the burning of the carbon material and the reduction of the iron oxide in the heat reducing and melting step. Therefore, if the operation is continued as it is, the effective processing pelformance of the hearth unit 3 (inner volume) can not be utilized fully in the latter half of the heat reduction. Accordingly, it is extremely effective for improving the productivity to additionally charge the starting material mixed powder in an amount corresponding to the reduced volume from the secondary supply portions 10a, 10b at the time the volume of the starting material mixed powder is decreased in each of the health units 3 in the course of the heat reduction as shown in the drawing and successively proceed the heat reduction.

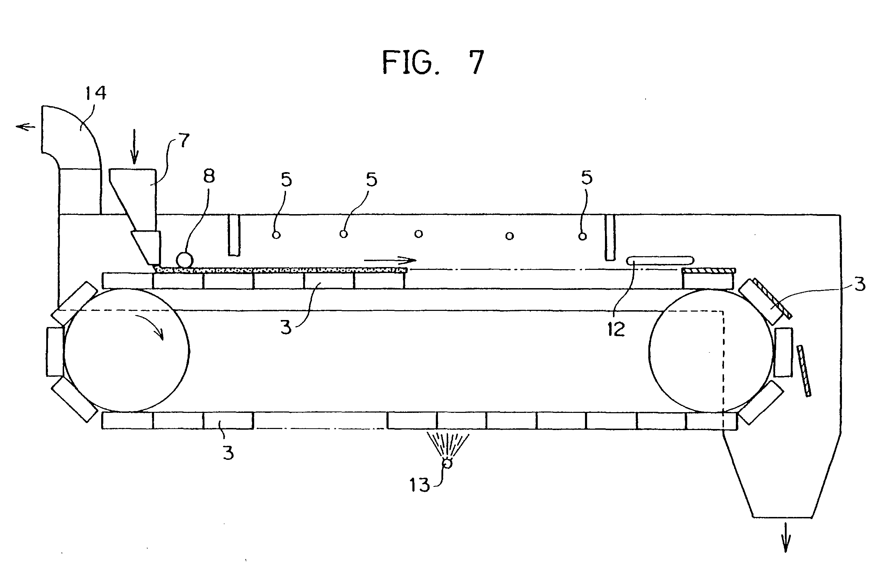

Fig. 7 is a schematic vertical cross sectional view illustrating a further embodiment of the present invention in which a plurality of hearth units 3, 3, ... ... are secured to a caterpillar type rotational driving device in which a series of steps for the starting material mixed powder of: supplying → pressing to compact state → heat reduction and melting → discharging can be practiced continuously along the closed loop. That is, as shown in the drawing, the starting material is supplied from a starting material supply portion 7 at the left end in the upper portion of the dosed loop onto the hearth unit 3, the starting material powder is pressed by a pressing roller 8 and optionally formed with unevenness and, successively, sent to and heated by a heating section 1 having a heating mechanism such as burners 5, by which reduction and melting are proceeded in the same manner as explained for the previously illustrated embodiment. Then, the product is cooled by a cooling mechanism 12 disposed at the downstream to the heating section and, when the product reaches the right end of Fig. 7, the hearth unit 3 is tilted in accordance with the rotation thereof, and the product is peeled off the hearth unit 3 and spontaneously fallen downwardly by its own weight. Accordingly, the product may be received in a downward place, pulverized and then separated into metallic iron and slag, for example, by magnetic selection.

Upon practicing this method, it is necessary that the product can be peeled easily from the hearth unit 3 and fallen. For this means, a product releasing promoter supply portion 13 is disposed in the lower portion of the closed loop and the product releasing promoter such as an MgO liquid suspension is deposited to a receiving surface of the hearth unit 3 at the position in this embodiment. The floor release promoter facilitates peeling of the product from the surface of the hearth unit as described above and there is no particular restriction on the kind of the promoter so long as it preferably comprises a compound having a melting point higher than that of reduced iron or produced slag, or a compound intruding into the formed slag to increase the melting point of the slag. In view of the product releasing promoting effect and the cost, most preferred are metal oxides such as MgO, CaO, Al₂O₃ or composite oxides containing them. Deposition of the product releasing promoter on the surface of the hearth unit is preferred since the product can be released from the floor as described above and the thermal degradation for the surface of the hearth unit can also be suppressed to extend the working life. Further, the product releasing promoter can also be supplied in a powdery form before the stalling material powder supply portion in addition to the illustrated embodiment.

Also in the embodiment shown in Fig. 7, it is effective to recover exhaust gases discharged from the heat reducing and melting section through a duct 14 and effectively utilize heat possessed therein or combustible gases contained in the exhaust gases as heat energy or fuels.

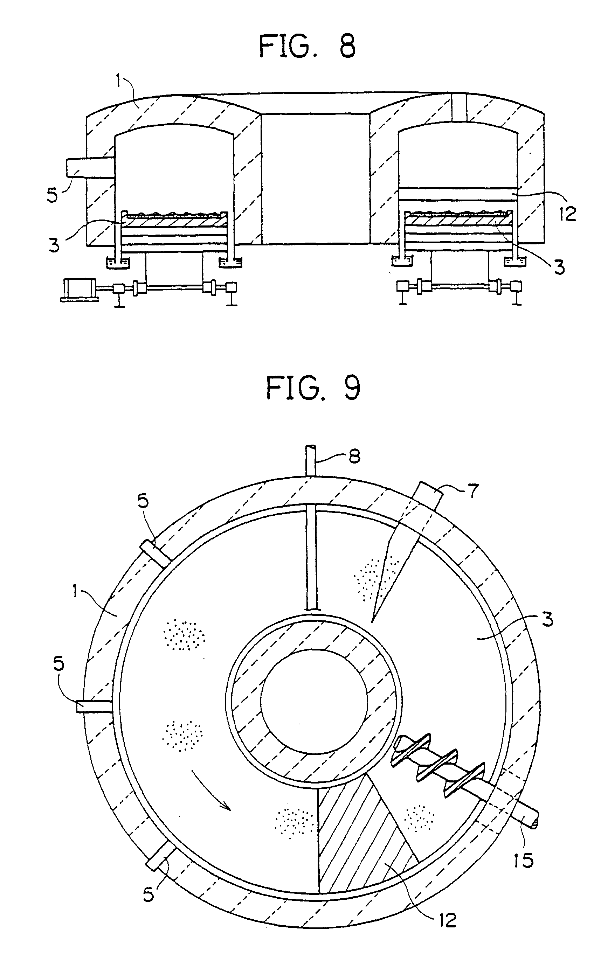

Fig. 8 and Fig. 9 are, respectively, a schematic vertical cross sectional view and a schematic transversal cross sectional view illustrating a further embodiment of the present invention, showing an apparatus of conducting heat reduction and melting on a disc-like hearth 3 rotating in a furnace formed into a doughnut shape.

The apparatus has a constitution in which the disc-like hearth 3 rotates like that a turn table in a doughnut-shaped heating furnace 1 in which a starting material mixed powder is supplied from a starting material supply portion 7, the mixture is pressed by a pressing roller 8, and reduction and melting are proceeded by the heat from burners 5. Then, after cooling the reduction product in a cooling zone 12, the product is discharged by a screw type discharging mechanism 15 disposed at the downstream while being peeled from a floor surface, and the slag ingredients and the reduced iron are separated by a sieve or a magnetic selection device not illustrated. Also upon practicing this method, it is effective to coat or spray a product releasing promoter just upstream of the starting material supply portion 7 for the promotion of product releasing and suppression of thermal degradation of the hearth, as well as unevenness is formed on the surface of the pressed layer by a portion of the pressing roller 8 to improve the heat reducing efficiency and, further, to effectively utilize the exhaust gases from the heating portion.

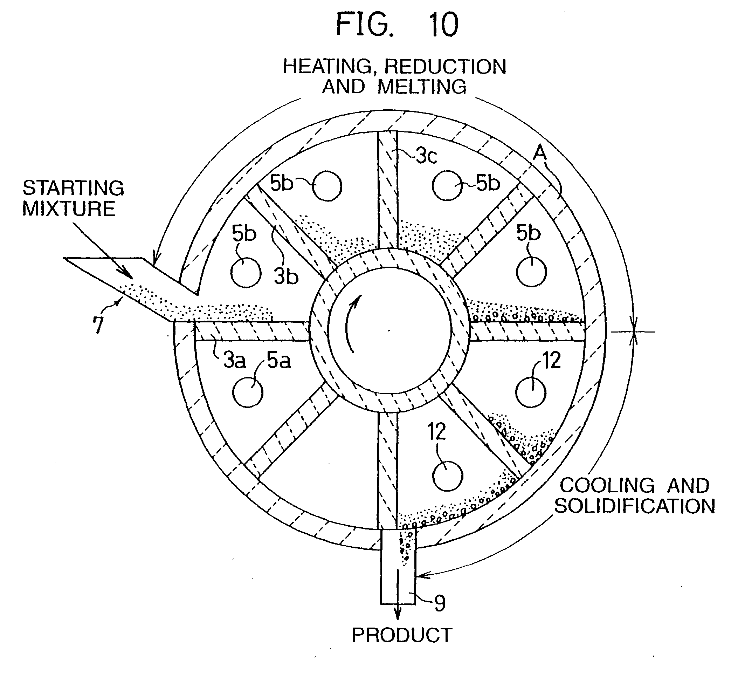

Fig. 10 is a schematic cross sectional view illustrating a further embodiment of the present invention comprising a plurality of hearth units 3a, 3b, 3c, ... ... rotating coaxially along a horizontally direction in a cylindrical refractory furnace A and having a structure of rotating them by an optional driving source along the inner circumferential wall of the refractory furnace A. A starting material supply portion 7 and a product discharging portion 9 are disposed at optional positions of the refractive furnace A, and a preheating burner 5a just before the starting material supply position, heating burners 5b, 5b, ... ... disposed downstream thereof in the rotating direction and a blow cooling portion 12a disposed further downstream thereto are disposed along the rotating direction of the hearth unit.

When reduction and melting are conducted by using the apparatus, a starting material mixed powder is charged from the starting material supply portion 7 into the furnace A till the hearth unit 3a preheated by a preheating burner 5a is rotated and reaches the starting material supply portion 7. The charged starting material mixed powder receives heat from the burner 5b while rotating being placed on the hearth unit 3a and reduced successively to form reduced iron, while the slag ingredients are separated successively. Then, at the further downstream, a cold blow from a blow cooling portion 12 is sent to cool and solidify the metallic iron and the slag ingredient formed by reduction and melting which are then discharged from a product discharge portion 9 successively out of the furnace A to separate the metallic iron and the slag ingredients, for example, by magnetic selection. The reduced iron can be manufactured continuously by continuously conducting the operation for the starting material mixed powder of charging → heat reduction and melting → cooling and solidification → discharging → separation of metallic iron.

While an example of once cooling to solidify the metallic iron formed by reduction and melting in the furnace A and then discharging the same out of the furnace A is shown, it is also effective to dispose the heating burner also to the blow cooling portion in the illustrated embodiment, melt the reduced iron and the slag ingredients entirely in the portion and then discharging them in a molten state from the discharge portion 9.

The method and the apparatus according to the present invention have been constituted, for example, as described above. The most prominent feature of the invention is to heat reduce under heating a mixture of the iron oxide source and the carbonaceous reducing agent in a powdery state as described above and the resultant reduced iron is separated in a molten state from the slag ingredients thereby capable of suppressing the intrusion of slag ingredients in the metallic iron to obtain reduced iron at high Fe purity. By the use of the method and the apparatus, reduced iron of extremely high Fe purity, for example, 95% or higher and, further, 98% or higher of the Fe content even from an iron oxide source of low quality with less iron oxide content, as well as from an iron oxide source with high quality. Accordingly, the present invention can effectively recover the Fe component even from wastes containing a small amount of iron oxides discharged, for example, as a blast furnace dusts. Further, it is also effective to improve the recovery rate of the Fe component by recycling the separated slag as the starting material and further recovering the iron oxide component mixed in a small amount in the slag.

By the way, as the carbonaceous reducing agent used in admixture with the iron oxide source, a coal powder or coke powder is most general. However, since a considerable amount of sulfur is contained in them, it may be a worry that a considerable amount of sulfur is mixed in the reduced iron formed in the heat reduction step to increase the desulfurization load in the subsequent refining step. However, when practicing the present invention, if a desulfurizer containing, for example, calcium carbonate, sodium carbonate, or calcium chloride is incorporated in an appropriate amount in the starting material mixed powder, so that the sulfur content formed in the heat reducing step can be captured by the desulfurizer and separated and removed together with the slag, it is possible to also reduce the sulfur content in the resultant reduced iron as low as possible.

### Example

The constitution, as well as the function and the effect of the present invention will be explained more concretely with reference to examples. It should however be noted that the present invention is not restricted by examples specified below and can be practiced with appropriate moderations or changes within a scope capable of conforming the gist as described previously and to be described later, all of which are encompassed within the technical scope of the present invention.

### Example 1

An iron ore powder and a coal powder each of the following ingredient composition were homogeneously mixed at the following ratio and the mixed powder (average grain size: 35 µm) was laid on a refractory tray at 100 mm□ × 40 mm thickness, which were charged in an electric furnace and heated at 1400°C in a nitrogen gas atmosphere, and the change of the mixed powder was obseived through a view window.

As a result, reduction of the iron ores proceeded along with the elapse of time, reduced molten iron was formed spotwise and then deposited and agglomerated successively and, after elapse of about 50 min, separated into a plurality of reduced iron lumps and slag in a molten state. Subsequently, they were cooled, and the tray was taken out of the electric furnace, to obtain a plurality of metallic iron lumps with metallic gloss and black slag of the following ingredient compositions.

### Starting Material Mixed Powder

Iron Ore Powder Composition (wt%)
   T.Fe: 69.4%, FeO: 30.1%, SiO₂: 1.75%,
   Al₂O₃: 0.49%, CaO: 0.45%
Coal Powder Composition (wt%)
   Fixed carbon: 68.5%, Volatile component: 21.4%, Ash: 10.1%,
Fixed carbon: 68.5%, Volatile component: 21.4%, Ash: 10.1%,
Iron Ore Powder: Coal powder = 76.9%: 23.1%
Product Composition (wt%)
   Reduced Iron Lump
      T.Fe: 96.75%, FeO: 0.31%, M.Fe: 96.39%,
      Total carbon: 2.22%, Metallization: 99.63%
   Slag
      T.Fe: 5.15%, FeO: 0.56%, M.Fe: 4.58%,
      SiO₂: 44.63%, Al₂O₃: 19.18%, CaO: 10.38%

### Example 2

A mixed powder formed by homogeneously mixing the same iron ore powder and the coal powder as used in Example 1 at an identical ratio (average grain size: 35 µm) was arranged by the number of 9 on a refractory tray in a state each compacted into a trapezoidal shape (upper surface 20 mm□ × lower surface 35 mm □ × 30 mm thickness), which were charged in an electric furnace and heated at 1400°C in a nitrogen gas atmosphere and the change of the mixed powder was observed through a view window.

As a result, reduction of the iron ores proceeded along with the elapse of time, reduced molten iron was formed spotwise and then deposited and agglomerated on every nine blocks successively and, after elapse of about 17 min, nine molten reduced iron lumps were formed. Subsequently, when they were cooled and the tray was taken out of the electac furnace under cooling; nine lumps of metallic iron with metallic gloss and black slag of the following ingredient compositions were obtained.

### Product Composition (wt%)

Reduced Iron Lump
   TFe: 96.35%, FeO: 0.30%, MFe: 95.96%,
   Total carbon: 2.75%, Metallization: 99.59%
Slag
   T.Fe: 10.66%, FeO: 2.37%, MFe: 8.57%,
   SiO₂: 49.42%, Al₂O₃: 17.40%, CaO: 9.51%

### EXPLOITATION IN INDUSTRY

As described above, reduced iron of high Fe purity can be obtained extremely simply and efficiently by heat reducing and melting a mixed powder of an iron oxide source and a carbonaceous reducing agent in a compacted state. Particularly, since preliminary molding to a lump or pellet shape as in the direct reducing iron making method practiced most generally at present is not required at all and, in addition, the reducing reaction proceeds rapidly in a state in which the iron source and the reducing agent are brought into contact with each other, the reducing efficiency is extremely high. Further, since the reduced iron formed by reduction is adhered and agglomerated to each other in a molten state while expelling the slag ingredients, reduced iron with less intrusion amount of the slag ingredients and of extremely high Fe purity can be obtained easily even by using an iron oxide source of law iron quality as well as using an iron oxide source of high iron quality. Therefore, it is possible to effectively recover the iron components from raw material of iron ores at law quality which have been considered not utilizable as the material for direct iron making in an industrial scale so far, also from waste materials, for example, waste materials with less iron content discharged as blast furnace dust.

Further, use of the apparatus according to the present invention enables continuous direct iron making by process using a powdery starting material mixture and can cope with mass production in an industrial scale easily.

The entire disclosure of Japanese Patent Application No. 9-291378 filed on October 23, 1997 including specification, claims, drawings and summary are incorporated herein by reference in its entirety.

## Claims

1. A method of making metallic iron which comprises heating a mixed powder of an iron oxide containing powder and a carbonaceous reducing agent containing powder in a state being laid on a hearth, thereby conducting reduction and melting, wherein the mixed powder laid on the hearth is pressed and then heated.

2. The method as defined in claim 1, wherein a layer of the mixed powder is formed with unevenness and then heated.

3. The method as defined in claim 1 or 2, wherein a product releasing promotion layer is previously formed on the hearth by depositing a product releasing promoter comprising a metal oxide of any one of MgO, CaO and Al₂O₃ and composite oxides containing them.

4. The method as defined in any one of claims 1 to 3, wherein the mixed powder further contains a desulfurizer.

5. The method as defined in any one of claims 1 to 4, wherein the reduced iron is cooled and solidified by a cooling mechanism to thereby obtain metallic iron lumps.

6. An apparatus for making metallic iron comprising:
a movable hearth,
a supply mechanism for supplying a mixed powder of an iron oxide containing powder and a carbonaceous reducing agent containing powder on the hearth,
a compression mechanism for pressing the mixed powder laid on the hearth,
a heating mechanism for heating the mixed powder on the hearth,
a discharge mechanism for discharging a product reduced and melted by heating to the outside of the hearth and a separation mechanism for separating the product into reduced iron and slag.

7. The apparatus as defined in claim 6, comprising an unevenness forming mechanism for forming an unevenness to a layer of the mixed powder.

8. The apparatus as defined in claim 6 or 7, comprising a product releasing promotion layer forming mechanism for forming a product releasing promotion layer on the hearth by depositing a product releasing promoter comprising a metal oxide of any one of MgO, CaO and Al₂O₃ and composite oxides containing them.

9. The apparatus as defined in any one of claims 6 to 8, wherein the hearth comprises a plurality of hearth units moving along a closed loop.

10. The apparatus as defined in any one of claims 6 to 8, wherein the hearth comprises a plurality of reciprocating hearth units.

11. The apparatus as defined in any one of claims 6 to 8, wherein the hearth is of a rotational disk-shape.

12. The apparatus as defined in any one of claims 6 to 8, wherein the hearth comprises a plurality of hearth units rotating coaxially in the inside of a horizontally placed cylindrical refractory furnace.

13. The apparatus as defined in any one of claims 6 to 12, further comprising a cooling mechanism disposed at the downstream to the heating mechanism.

## Patentansprüche

1. Verfahren zur Herstellung von metallischem Eisen, welches das Erwärmen eines Pulvergemischs eines Eisenoxid-enthaltenden Pulvers und eines Pulvers, das ein kohlenstoffhaltiges Reduktionmittel enthält, in einem auf einer Herdsohle abgelegten Zustand umfaßt, wodurch das Reduzieren und das Schmelzen durchgeführt wird, wobei das auf der Herdsohle abgelegte Pulvergemisch komprimiert und anschließend erwärmt wird.

2. Verfahren nach Anspruch 1, wobei eine Schicht des Pulvergemischs unregelmäßig geformt und anschließend erwärmt wird.

3. Verfahren nach Anspruch 1 oder 2, wobei eine Produktabtrennungspromotorschicht zuvor auf der Herdsohle durch Aufbringen eines Produktabtrennungspromotors, welcher ein Metalloxid von irgendeinem von MgO, CaO und Al₂O₃ und diese enthaltende Mischoxide umfaßt, gebildet wird.

4. Verfahren nach einem der Ansprüche 1 bis 3, wobei das Pulvergemisch ferner ein Entschwefelungsmittel enthält.

5. Verfahren nach einem der Ansprüche 1 bis 4, wobei das reduzierte Eisen durch einen Kühlmechanismus gekühlt und verfestigt wird, um dadurch metallische Eisenstücke zu erhalten.

6. Vorrichtung zur Herstellung von metallischem Eisen, umfassend:
eine bewegliche Herdsohle,
einen Zuführmechanismus zum Zuführen eines Pulvergemischs eines Eisenoxid-enthaltenden Pulvers und eines Pulvers, das ein kohlenstoffhaltiges Reduktionsmittel enthält, auf die Herdsohle,
einen Komprimierungsmechanismus zum Verdichten des auf der Herdsohle abgelegten Pulvergemischs,
einen Erwärmungsmechanismus zum Erwärmen des Pulvergemischs auf der Herdsohle,
einen Austragsmechanismus zum Austragen eines durch Erwärmen reduzierten und geschmolzenen Produkts zu der äußeren Seite der Herdsohle und einen Abtrennmechanismus zum Abtrennen des Produkts in reduziertes Eisen und Schlacke.

7. Vorrichtung nach Anspruch 6, umfassend ein Unregelmäßigkeits-Bildungsmechanismus zum Bilden einer Unregelmäßigkeit einer Schicht des Pulvergemischs.

8. Vorrichtung nach Anspruch 6 oder 7, umfassend einen Bildungsmechanismus für die Produktabtrennungspromotorschicht zum Bilden einer Produktabtrennungspromotorschicht auf der Herdsohle durch Aufbringen eines Produktabtrennungspromotors, umfassend ein Metalloxid von irgendeinem von MgO, CaO und Al₂O₃ und diese enthaltende Mischoxide.

9. Vorrichtung nach einem der Ansprüche 6 bis 8, wobei die Herdsohle eine Vielzahl von Herdsohleneinheiten umfaßt, die sich entlang einer geschlossenen Schleife bewegen.

10. Vorrichtung nach einem der Ansprüche 6 bis 8, wobei die Herdsohle eine Vielzahl von sich hin- und herbewegenden Herdsohleneinheiten umfaßt.

11. Vorrichtung nach einem der Ansprüche 6 bis 8, wobei die Herdsohle eine rotierende Scheibenform aufweist.

12. Vorrichtung nach einem der Ansprüche 6 bis 8, wobei die Herdsohle eine Vielzahl von Herdsohleneinheiten umfaßt, die koaxial im Inneren eines horizontal angeordneten zylindrischen Feuerfestofens rotieren.

13. Vorrichtung nach einem der Ansprüche 6 bis 12, welche ferner einen am stromabwärts gelegenen Ende des Erwärmungsmechanismus angeordneten Kühlmechanismus umfaßt.

## Revendications

1. Procédé de fabrication de fer métallique qui comprend le chauffage d'une poudre mixte constituée d'une poudre contenant de l'oxyde de fer et d'une poudre contenant un agent réducteur carboné dans un état où elle est étendue sur une sole, en exécutant ainsi une réduction et une fusion, dans lequel la poudre mixte étendue sur la sole est comprimée et ensuite chauffée.

2. Procédé selon la revendication 1, dans lequel une couche de la poudre mixte présente un aspect inégal et est ensuite chauffée.

3. Procédé selon la revendication 1 ou 2, dans lequel une couche favorisant la libération de produit est formée au préalable sur la sole en déposant un agent favorisant la libération de produit comprenant un oxyde de métal de l'un quelconque de MgO, CaO et Al₂O₃ et d'oxydes composites les contenant.

4. Procédé selon l'une quelconque des revendications 1 à 3, dans lequel la poudre mixte contient en outre un agent désulfurant.

5. Procédé selon l'une quelconque des revendications 1 à 4, dans lequel le fer réduit est refroidi et solidifié par un mécanisme de refroidissement afin d'obtenir ainsi des masses de fer métallique.

6. Dispositif de fabrication de fer métallique comprenant :
une sole mobile,
un mécanisme d'alimentation destiné à fournir une poudre mixte constituée d'une poudre contenant de l'oxyde de fer et d'une poudre contenant un agent réducteur carboné sur la sole,
un mécanisme de compression destiné à comprimer la poudre mixte étendue sur la sole,
un mécanisme de chauffage destiné à chauffer la poudre mixte sur la sole,
un mécanisme d'évacuation destiné à évacuer un produit réduit et fondu par chauffage vers l'extérieur de la sole et un mécanisme de séparation destiné à séparer le produit en fer réduit et en scories.

7. Dispositif selon la revendication 6, comprenant un mécanisme de formation d'inégalité destiné à former une inégalité sur une couche de la poudre mixte.

8. Dispositif selon la revendication 6 ou 7, comprenant un mécanisme de formation de couche favorisant la libération de produit destiné à former une couche favorisant la libération de produit sur la sole en déposant un agent favorisant la libération de produit comprenant un oxyde de métal de l'un quelconque de MgO, CaO et Al₂O₃ et d'oxydes composites les contenant.

9. Dispositif selon l'une quelconque des revendications 6 à 8, dans lequel la sole comprend une pluralité d'unités de soles se déplaçant le long d'une boucle fermée.

10. Dispositif selon l'une quelconque des revendications 6 à 8, dans lequel la sole comprend une pluralité d'unités de soles allant et venant.

11. Dispositif selon l'une quelconque des revendications 6 à 8, dans lequel la sole est en forme de disque tournant.

12. Dispositif selon l'une quelconque des revendications 6 à 8, dans lequel la sole comprend une pluralité d'unités de soles tournant coaxialement à l'intérieur d'un four réfractaire cylindrique placé horizontalement.

13. Dispositif selon l'une quelconque des revendications 6 à 12, comprenant en outre un mécanisme de refroidissement disposé en aval du mécanisme de chauffage.
